# FASCICULE DE BREVET EUROPEEN

(11) **EP 2 493 832 B1**
(45) Date de publication et mention de la délivrance du brevet: **10.12.2014**
(21) Numéro de dépôt: 10787847.2
(22) Date de dépôt: 26.10.2010
(51) Int. Cl.: F02K 9/97, F02K 1/82, C04B 35/52, C04B 35/565, C04B 35/628, C04B 35/80, D06C 29/00

(54) **PIECE EN MATERIAU COMPOSITE THERMOSTRUCTURAL DE FAIBLE EPAISSEUR ET PROCEDE DE FABRICATION**
THERMOSTRUKTURELLES VERBUNDSTOFFMATERIALTEIL MIT GERINGER DICKE UND HERSTELLUNGSVERFAHREN
LOW-THICKNESS THERMOSTRUCTURAL COMPOSITE MATERIAL PART, AND MANUFACTURE METHOD

(30) Priorité: 30.10.2009 FR 0957676
(43) Date de publication de la demande: 05.09.2012
(73) Titulaire: HERAKLES, 33185 Le Haillan (FR)
(72) Inventeur: CHARLEUX, François, F-33000 Bordeaux (FR); COUPE, Dominique, F-33185 Le Haillan (FR); PHILIPPE, Eric, F-33700 Merignac (FR)
(74) Mandataire: Laïk, Eric
(86) Numéro de dépôt international: PCT/FR2010/052285
(87) Numéro de publication internationale: WO 2011/051611

(56) Documents cités:
- EP-A2- 0 302 449
- WO-A1-94/12708
- WO-A1-2007/148019
- WO-A1-2010/007308
- WO-A2-2008/104692
- FR-A1- 2 902 802

## Description

### Arrière-plan de l'invention

L'invention concerne des pièces en matériau composite thermostructural, plus précisément de telles pièces qui, au moins dans une partie, ont une faible épaisseur, c'est-à-dire une épaisseur inférieure à 2 mm.

L'invention s'applique plus particulièrement à des pièces structurales destinées à des applications dans les domaines aéronautique et spatial, notamment des pièces d'arrière-corps de moteurs aéronautiques à turbine à gaz, des divergents de tuyères,...

Pour de telles pièces, il a été proposé d'utiliser des matériaux composites thermostructuraux, c'est-à-dire des matériaux composites ayant des propriétés mécaniques qui les rendent aptes à constituer des éléments de structure et ayant la capacité de conserver ces propriétés à des températures élevées. De tels matériaux thermostructuraux sont notamment les matériaux composites carbone/carbone ou C/C (renfort en fibres de carbone et matrice en carbone) et les matériaux composites à matrice céramique ou CMC, par exemple C/SiC (renfort en fibres de carbone et matrice en carbure de silicium), C/C-SiC (renfort en fibres de carbone et matrice mixte carbone-carbure de silicium) ou encore SiC/SiC.

La fabrication d'une pièce en matériau C/C ou CMC comprend habituellement la réalisation d'une préforme fibreuse ayant une forme correspondant à celle de la pièce à obtenir et destinée à constituer le renfort fibreux du matériau composite, et la densification de la préforme fibreuse par la matrice du matériau composite.

Pour conférer au matériau composite les propriétés mécaniques souhaitées tout en laissant une porosité accessible suffisante pour permettre la densification par la matrice, le taux volumique de fibres, c'est-à-dire le pourcentage occupé par les fibres du volume de la pièce ou du volume apparent du renfort fibreux est généralement compris entre 25% et 45%.

La préforme fibreuse peut être obtenue par drapage de strates fibreuses, par exemple des strates de tissu ou de nappes de fils unidirectionnelles ou multidirectionnelles, plusieurs strates pouvant être superposées et liées entre elles par exemple par aiguilletage. La préforme fibreuse peut aussi être obtenue à partir d'une structure fibreuse obtenue par tissage tridimensionnel (3D) ou tissage multi-couches (plusieurs couches de fils de chaîne liées par des fils de trame).

La densification de la préforme fibreuse par une matrice carbone ou céramique peut être effectuée par voie liquide ou par infiltration chimique en phase gazeuse, ou CVI ("Chemical Vapor Infiltration"). La densification par voie liquide comprend une imprégnation de la préforme fibreuse par une composition liquide contenant une résine précurseur de carbone ou céramique puis la polymérisation et la pyrolyse de la résine pour obtenir un résidu carbone ou céramique, plusieurs cycles consécutifs d'imprégnation, polymérisation et pyrolyse pouvant éventuellement être réalisés. La densification par CVI est réalisée en disposant la préforme fibreuse dans une enceinte et en admettant dans l'enceinte une phase gazeuse réactionnelle qui, dans des conditions déterminées notamment de pression et de température, diffuse au sein de la préforme et permet d'obtenir un dépôt du matériau de la matrice par décomposition d'un ou plusieurs constituants de la phase gazeuse ou par réaction entre plusieurs constituants. Pour des pièces de formes particulières, notamment de forme complexe, une première étape de consolidation par voie liquide peut être réalisée en utilisant un outillage approprié, afin de figer la préforme fibreuse dans la forme voulue, la densification étant poursuivie sans l'aide d'outillage, par exemple par CVI.

Les techniques ci-dessus sont bien connues et ont déjà été proposées pour réaliser des pièces exposées en service à des températures élevées pour des applications dans les domaines aéronautique et spatial, notamment des aubes de turbines de moteurs aéronautiques, des parties d'arrière-corps de moteurs aéronautiques telles que des tuyères secondaires, des mélangeurs pour turbines à double flux, des cônes d'échappement ou des volets de tuyère et des tuyères de moteurs-fusées. On pourra se référer notamment aux documents suivants de la demanderesse : WO 2010/007308, WO 2010/061139, WO 2010/061140 et WO 2008/104692.

Dans le cas de pièce ou de partie de pièce de faible épaisseur se pose le problème de la réalisation d'une préforme fibreuse apte à procurer les propriétés souhaitées à la pièce à fabriquer.

La technique connue consistant à former une préforme fibreuse par aiguilletage de strates superposées n'est guère appropriée car, pour obtenir une préforme fibreuse mince à caractéristiques homogènes, il est nécessaire de réaliser une structure fibreuse beaucoup plus épaisse dont seule la partie centrale est exploitable, ce qui entraîne de fortes pertes de matière.

La technique connue consistant à former une préforme fibreuse par une structure tissée multi-couches présente aussi des inconvénients. Même en utilisant des fils de carbone ou céramique de titre minimum disponibles dans le commerce, la réalisation de parties de pièces de faible épaisseur nécessite une diminution du nombre de couches du tissu multicouches, par exemple deux couches seulement pour une épaisseur de 0,75 mm comme montré par le document WO 2008/104692, ce qui peut affecter la tenue mécanique de la pièce. En outre, le tissage multi-couches produit un état de surface irrégulier et une association de micro-porosités (au sein des fils) et de macro-porosités (entre les fils). Pour des pièces destinées à des applications dans les domaines aéronautique et spatial, telles que par exemple des mélangeurs de flux ou de tuyères, on recherche de préférence un état de surface lisse pour éviter des perturbations d'écoulement de fluide. L'utilisation d'une préforme avec un état de surface très irrégulier conduit, même après densification, à une pièce présentant un relief important en surface. Un usinage de surface final pourrait certes y remédier, mais conduirait à la destruction et à la mise à nu de fibres, ce qui est indésirable. En outre, l'existence de macro-porosités rend inévitable la présence d'une porosité résiduelle irrégulière après densification.

On connaît par ailleurs du document WO 94/12708 un tissu bidimensionnel chaîne et trame convenant à la réalisation de textures de renfort pour des pièces en matériau composite, le tissu étant soumis à une opération d'étalement par vibration des fils qui le constituent afin d'augmenter le taux volumique de fibres. L'étalement d'un tissu bidimensionnel par vibration pour éliminer les trous du tissu et donc augmenter le taux volumique de fibres et également décrit dans le document EP 0 302 449.

### Objet et résumé de l'invention

L'invention a pour objet de fournir une pièce en matériau composite thermostructural convenant pour les applications précitées tout en ayant, dans au moins une partie de la pièce, une faible épaisseur et un renfort fibreux obtenu par tissage multi-couches avec un nombre de couches relativement élevé y compris dans la partie de faible épaisseur.

Ce but est atteint grâce à une pièce dans laquelle, dans au moins une partie de la pièce :
- l'épaisseur de la pièce est inférieure à 2 mm,
- le renfort fibreux est formé par une seule épaisseur de tissu multi-couches formé de fils étalés ayant un titre au moins égal à 200 tex,
- le taux volumique de fibres est compris entre 25 % et 45 %, et
- le rapport entre le nombre de couches du tissu multi-couches et l'épaisseur en mm de la pièce est au moins égal à 4.

Dans ladite partie de pièce, l'épaisseur peut même être inférieure à 1 mm.

De préférence, le nombre de couches de fils dans le tissu est au moins égal à 3. Par nombre de couches, on entend ici le nombre de couches de fils de chaîne.

Le tissu multi-couches peut être à armure de type multi-toile, multi-sergé ou multi-satin.

La matrice peut être au moins partiellement en céramique notamment lorsque la pièce constitue une pièce d'arrière-corps de moteur aéronautique à turbine à gaz.

Selon une autre application particulière, la pièce constitue au moins une partie d'un divergent de moteur-fusée, la matrice pouvant alors être en carbone ou céramique.

L'invention vise aussi un procédé d'obtention d'une telle pièce comprenant la réalisation d'une préforme fibreuse en fibres de carbone ou de céramique et la densification de la préforme par une matrice,
procédé selon lequel, pour la réalisation d'au moins une partie de la préforme ayant une épaisseur inférieure à 2 mm :
- on réalise un tissu multi-couches avec des fils ayant un titre au moins égal à 200 tex,
- on soumet le tissu à une opération d'étalement des fils de manière à réduire l'épaisseur de tissu multi-couches, et
- on réalise la partie de préforme avec le tissu multi-couches étalé, l'épaisseur de la partie de préforme étant formée par une seule épaisseur de tissu étalé avec un rapport entre le nombre de couches de tissu et l'épaisseur en mm de la préforme au moins égal à 4,
- la contexture du tissu multi-couches lors du tissage étant choisie pour avoir, dans la préforme fibreuse, un taux volumique de fibres compris entre 25% et 45%.

De préférence, le nombre de couches du tissu multi-couches est au moins égal à 3.

Le tissage multi-couches est de préférence réalisé avec une armure de type multi-toile, multi-sergé ou multi-satin.

L'invention est remarquable en ce que, par l'étalement des fils du tissu multi-couches on peut avoir une préforme fibreuse de faible épaisseur permettant la réalisation de pièces ou parties de pièces minces en matériau composite, c'est-à-dire ayant une épaisseur inférieure à 2 mm voire inférieure à 1 mm, tout en préservant la présence de couches de fils en nombre suffisant afin d'obtenir de bonnes propriétés mécaniques.

Le but recherché n'est pas d'avoir une préforme fibreuse avec un taux volumique de fibres plus élevé que dans l'état de la technique. Lors de la réalisation de la préforme fibreuse, il est donc nécessaire d'adapter la contexture du tissu multi-couches pour avoir le taux volumique de fibres désiré après étalement.

L'étalement des fils du tissu multi-couches est aussi avantageux en ce qu'il permet de réduire les macro-porosités du tissu multi-couches (espaces entre fils), ce qui est favorable pour la densification de la préforme.

Un autre avantage procuré est l'atténuation du relief en surface du tissu multi-couches ce qui permet d'avoir, sur la pièce obtenue, un état de surface amélioré pour une application dans le domaine aéronautique.

### Brève description des dessins

L'invention sera mieux comprise à la lecture de la description faite ci-après, à titre indicatif mais non limitatif, en référence aux dessins annexés sur lesquels :
- la figure 1 indique des étapes de fabrication d'une pièce en matériau composite selon un mode de réalisation de l'invention ;
- la figure 2 montre un plan d'armure de tissu multi-couches de type multi-sergé ;
- la figure 3 montre un plan d'armure de tissu multi-couches de type multi-satin ;
- les figures 4 et 5 sont des vues prises au microscope optique montrant, en coupe, des pièces minces en matériau composite obtenue par un procédé selon l'invention et par un procédé selon l'art antérieur ; et
- la figure 6 montre un plan d'armure de tissu multi-couches de type multi-toile.

### Description de modes particuliers de réalisation

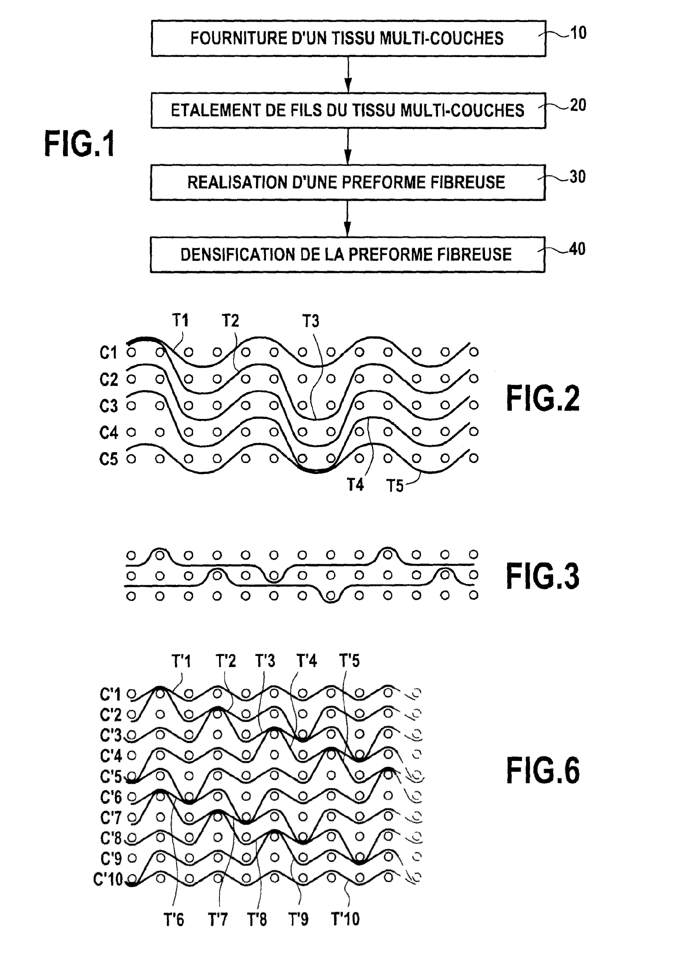

Un procédé de fabrication d'une pièce en matériau composite thermostructural sera maintenant décrit en référence à la figure 1, la pièce à fabriquer étant ici une pièce mince d'épaisseur sensiblement uniforme.

Une première étape 10 du procédé consiste à fournir un tissu multi-couches. Le tissu est réalisé avec des fils de carbone ou de céramique. On utilise avantageusement des fils disponibles dans le commerce ayant un titre au moins égal à 200 tex. Le tissage multi-couches ou tridimensionnel consiste à lier entre elles des couches de fils de chaîne au moyen de fils de trame dont au moins certains saisissent des fils de chaîne appartenant à des couches différentes. Le nombre de couches de fils est de préférence au moins égal à 3. Avantageusement, le tissage est réalisé avec une armure de type multi-toile, multi-sergé ou multi-satin. D'autres armures sont envisageables, par exemple une armure de type interlock. On pourra se référer au document WO 2006/136755 dont le contenu est incorporé ici par voie de référence et qui décrit différents types d'armures de tissage multi-couches.

Une deuxième étape 20 du procédé consiste à étaler les fils du tissu multi-couches afin de réduire l'épaisseur de celui-ci. L'étalement peut être réalisé en soumettant le tissu à l'action d'un jet fluide ou par vibration mécanique. Des processus d'étalement de fils dans un tissu classique bidirectionnel sont connus. On pourra se référer notamment aux documents WO 2005/095689, WO 96/41046, US 5 557 831 et au document WO 94/12708 déjà cité. Afin de favoriser l'étalement, on utilise de préférence pour le tissage des fils formés de filaments pratiquement sans torsion. L'étalement permet d'amener l'épaisseur du tissu, après étalement, à une valeur inférieure à 85% de l'épaisseur initiale du tissu avant étalement, par exemple comprise entre 70% et 85% de l'épaisseur initiale.

Une préforme fibreuse ayant une forme correspondant à celle de la pièce à fabriquer est ensuite réalisée (étape 30) au moyen du tissu étalé. On peut utiliser une strate unique de tissu étalé ou plusieurs strates disposées côte à côte et liées entre elles le long de leurs bords adjacents par exemple par couture. Dans tous les cas, l'épaisseur de la préforme fibreuse est formée par une seule épaisseur de tissu. La réalisation de la préforme fibreuse peut comporter une mise en forme ou conformation au moyen d'un outillage ou conformateur. Lors de la mise en forme ou conformation, un compactage peut être réalisé par compression par exemple entre un moule et un contre-moule ou entre une forme et une membrane.

La préforme fibreuse obtenue après compactage éventuel a une épaisseur inférieure à 2 mm, voire même inférieure à 1 mm et présente un taux de fibres compris entre 25 % et 45 %, le taux de fibres étant le pourcentage du volume apparent de la préforme effectivement occupé par les fibres des fils, le reste du volume étant constitué par les porosités au sein des fils étalés et entre les fils.

Le rapport entre le nombre de couches du tissu formant la préforme et l'épaisseur en mm de la préforme fibreuse est au moins égal à 4.

Ainsi, pour une épaisseur e de préforme fibreuse désirée, et en fonction du titre des fils disponibles, on choisit un nombre n de couches du tissu multi-couches tel que n ≥ 4e et tel que n ≤ nₘₐₓ où nₘₐₓ est le nombre maximum de couches permettant, après étalement maximum des fils et compactage éventuel de la préforme, d'obtenir l'épaisseur désirée.

Le tableau I ci-après donne deux exemples d'obtention de préformes minces à partir de fils de céramique (SiC), ces exemples étant décrits en détail plus loin. La contexture est exprimée en nombres de fils de chaîne par cm en sens trame, dans chaque couche de fils de chaîne, et en nombre de fils de trame par cm en sens chaîne, dans chaque couche de fils de trame. La valeur d'étalement donnée est la valeur moyenne de variation de largeur des fils de chaîne et trame de surface du tissu multi-couches, après étalement des fils, cette variation étant exprimée en pourcentage de la largeur des fils du tissu avant étalement. L'épaisseur du tissu étalé est mesurée sous charge de 5 kPa, c'est-à-dire entre deux plaques avec application d'une pression de 5 kPa.

**Tableau I**

| Exemple | | 1 | | 2 | |
|---|---|---|---|---|---|
| Nature de fils | | SiC | | SiC | |
| Titre des fils (tex) | | 200 | | 200 | |
| Tissage | Armure | multi-sergé | | multi-toile | |
| | Nombre n de couches | 5 | | 10 | |
| | Contexture | 5 | 5 | 2,5 | 2,5 |
| Etalement moyen des fils (%) | | 31% | | 73% | |
| Préforme | Epaisseur e (mm) | 1,3 | | 1.37 | |
| | Taux de fibres (%) | 33% | | 31% | |
| | Rapport n/e | 3,8 | | 7,3 | |

Dans l'Exemple 1, la condition n/e ≥ 4 est satisfaite par un compactage plus important lors de la mise en oeuvre du tissu étalé.

La mise sous charge de la préforme produit un compactage qui se traduit par une réduction d'épaisseur mais augmente le taux de fibres. La contexture des fils au tissage doit alors être choisie en conséquence pour respecter un taux de fibres désiré pour le niveau de compactage correspondant à l'épaisseur voulue. C'est ainsi que dans l'exemple 2 la contexture est moitié de celle de l'exemple 1 dans chaque direction chaîne et trame.

La préforme fibreuse est densifiée (étape 40) par une matrice en carbone ou au moins en partie en céramique pour obtenir la pièce en matériau composite thermostructural désirée. La densification peut être réalisée par voie liquide ou par CVI comme indiqué dans la partie introductive de la description, ces processus étant bien connus en eux-mêmes. Lorsque la matrice est au moins en partie en céramique, elle pourra comporter au moins une phase céramique auto-cicatrisante, c'est-à-dire capable de cicatriser des fissures de la matrice par passage à l'état pâteux dans une certaine gamme de températures. La réalisation de matrices céramiques éventuellement auto-cicatrisantes est décrite notamment dans les documents FR 2 401 888, US 5 246 736, US 5 965 266, US 6 068 730 et US 6 291 058.

De façon connue, la densification pourra comporter une première phase de consolidation de la préforme permettant à celle-ci de conserver sa forme sans l'aide d'un outillage de maintien. La consolidation est réalisée par densification partielle de la préforme maintenue dans un outillage, cette densification partielle étant obtenue par voie liquide ou par CVI, la densification étant ensuite poursuivie sans l'outillage.

Egalement de façon connue, une couche d'interphase de défragilisation pourra être déposée sur les fibres de la préforme fibreuse. Une telle interphase, typiquement en carbone pyrolytique (PyC) nitrure de bore (BN) ou carbone dopé au bore (BC avec 5 % à 20 % at. B, le reste étant C) peut être formée sur les fibres par CVI avant ou après conformation de la préforme.

Enfin toujours de façon connue, un traitement des fibres peut être réalisé avant dépôt éventuel d'une couche d'interphase, consolidation éventuelle et densification. Ce traitement peut être effectué au stade préforme ou tissu multi-couches ou même sur les fils avant tissage. Dans le cas de fils en carbone, ce traitement peut consister en un traitement thermique entre 1 300°C et 2 200°C comme décrit dans le document EP 0 441 700, tandis que dans le cas de fils en céramique, ce traitement peut consister en un traitement acide comme décrit dans le document US 5 071 679.

On notera que dans le cas d'une consolidation par une phase céramique obtenue par voie liquide, il est souhaitable qu'avant consolidation, les fibres de la préforme soient munies d'une première couche mince d'interphase. Une deuxième couche d'interphase est alors formée après consolidation. On pourra se référer au document EP 09 165 172.9.

Après densification, on obtient une pièce en matériau composite thermostructural ayant, comme la préforme, une épaisseur inférieure à 2 mm, voire même inférieure à 1 mm.

L'invention est applicable aussi dans le cas où une pièce en matériau composite thermostructural à réaliser doit présenter une faible épaisseur, inférieure à 2 mm, dans seulement une de ses parties.

Dans un tel cas, selon une première possibilité, on réalise séparément une partie de préforme d'épaisseur inférieure à 2 mm en utilisant un tissu multi-couches et en réalisant un étalement des fils du tissu comme décrit ci-avant. La ou chaque autre partie de préforme est réalisée sous forme d'une texture fibreuse qui peut être obtenue de toute façon désirée, non nécessairement par tissage multi-couches. Les parties de préforme sont assemblées entre elles, par exemple par couture, pour obtenir la préforme souhaitée.

Selon une autre possibilité, on réalise la préforme fibreuse intégralement à partir d'un tissu multi-couches qui est tissé en augmentant le nombre de couches de fils de chaîne et de fils de trame tissés dans la ou chaque partie de plus forte épaisseur. L'étalement des fils du tissu multi-couches peut être réalisé dans seulement la partie mince du tissu, par exemple par action d'un jet fluide, ou dans l'intégralité du tissu.

### Exemple 1 (selon l'invention)

Une plaque mince en matériau CMC a été réalisée de la façon suivante.

Un tissu multi-couches à armure de type multi-sergé 2 lie 2 a été réalisé avec des fils SiC de titre égal à 200 tex fournis sous la dénomination "Nicalon" par la société japonaise Nippon Carbon. La contexture en chaîne/trame était de 5 x 5 (5 fils de chaîne par cm en sens trame dans chaque couche de fils de chaîne et 5 fils de trame par cm en sens chaîne dans chaque couche de fils de trame). Le nombre de couches était égal à 5, à savoir 5 couches de fils de chaîne C1 à C5 et 5 couches de fils de trame T1 à T5.

La figure 2 montre un premier plan de trame (les fils de chaîne étant en coupe), les autres plans de trame s'en déduisant par décalages successifs en sens trame d'un pas entre colonnes de fils de chaîne. Les fils T1 et T5 réalisent un liage des fils des couches de chaîne de surface C1 et C5 selon une armure sergé classique (tissage bidimensionnel). Le fil T2 réalise un liage entre fils de chaîne des couches C1, C3, C3, tandis que le fil T3 réalise un liage entre fils de chaîne des couches C2, C3, C4 et que le fil T4 réalise un liage entre fils de chaîne des couches C3, C4 et C5.

On a ainsi obtenu un tissu multi-couches d'épaisseur égale à environ 1,7 mm sous une charge de 5 kPa.

Un étalement des fils du tissu a été réalisé en soumettant le tissu à une vibration jusqu'à réduire l'épaisseur à une valeur égale à environ 1,3 mm sous charge de 5 kPa. Le taux volumique de fibres était de 33% environ.

La plaque en matériau CMC a ensuite été obtenue par un procédé tel que décrit dans le document EP 09 165 172.9 précité.

Ainsi, après formation sur les fibres du tissu d'une première couche d'interphase PyC d'épaisseur environ égale à 50 nm et obtenue par CVI, le tissu a été imprégné par une résine polysiloxane précurseur de céramique, en solution dans du méthyl-éthyl-cétone. Après séchage, une réticulation de la résine a été effectuée avec le tissu maintenu dans la forme désirée au moyen d'un outillage, l'épaisseur étant réduite à environ 1 mm par compactage. La préforme fibreuse ainsi consolidée a été retirée de l'outillage et a été placée dans un four de CVI où la résine a été pyrolysée avant d'enchaîner la formation par CVI d'une deuxième couche d'interphase PyC d'épaisseur environ égale à 200 nm recouvrant la première couche d'interphase et les grains de résidu de pyrolyse de la résine, et la densification par CVI par une matrice céramique de type silicium-bore-carbone (Si-B-C) comme décrit dans le document US 5 246 736 déjà cité.

On a obtenu une plaque en matériau CMC d'épaisseur environ égale à 1 mm comprenant un renfort fibreux tissé multi-couches avec 5 couches de fils de chaîne et 5 couches de fils de trame.

### Exemple comparatif 1 (selon l'art antérieur)

On a réalisé un tissu multi-couches en utilisant les mêmes fils que dans l'exemple 1. Afin de limiter l'épaisseur du tissu à 1 mm environ, le tissage a été effectué avec 3 couches de fils de chaîne et 2 couches de fils de trame, le nombre de couches du tissu étant donc égal à 3. On a utilisé une armure de type multi-satin dont un plan de trame est montré sur la figure 3, les autres plans de trame se déduisant par décalages successifs, dans le sens trame. Le taux de fibres du tissu multi-couches était de 40% environ.

Une plaque en matériau composite CMC a été obtenue à partir du tissu multi-couches (sans étalement des fils) comme décrit dans l'exemple 1.

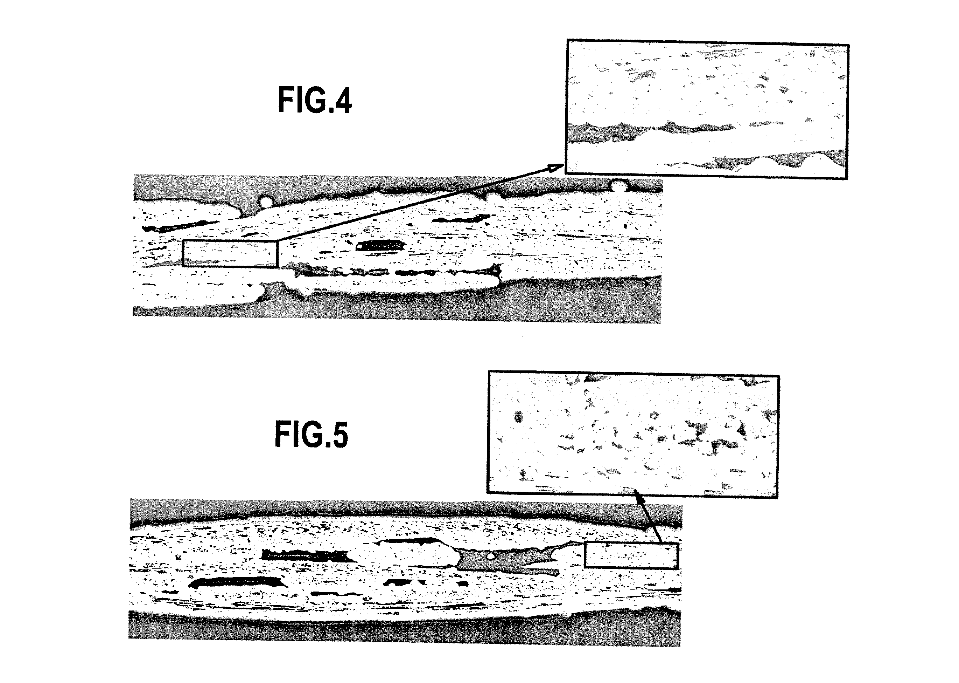

Les figures 4 et 5 sont des vues en coupe des pièces obtenues selon l'exemple 1 et l'exemple comparatif 1, respectivement. On constate que l'invention permet une réduction des macroporosites au sein du matériau composite. A taux de fibres égal, le fractionnement de la porosité de la préforme fibreuse grâce à l'étalement des fils permet d'obtenir un tel résultat. Cela s'ajoute au fait qu'à épaisseur égale, un matériau composite avec un renfort fibreux ayant un nombre plus élevé de couches de fils est obtenu. De plus, alors que l'exemple 2 montre une limite technologique des procédés de l'art antérieur en terme d'épaisseur, le procédé selon l'invention permet d'atteindre des épaisseurs de pièces inférieures à 1 mm tout en ayant un nombre de couches de fils satisfaisant dans le tissu multi-couches formant le renfort fibreux de la pièce. De plus encore, l'étalement des fils du tissu multi-couches réduit les irrégularités de surface.

### Exemple 2 (Selon l'invention)

Un tissu multi-couches à armure de type multi-toile a été réalisé en utilisant les mêmes fils que dans l'exemple 1. La contexture en chaîne/trame était de 2,5 x 2,5. Le nombre de couches était égal à 10, à savoir 10 couches de fils de chaîne C'1 à C'10 et 10 couches de fils de trame T'1 à T'10.

La figure 6 montre un premier plan de trame, les autres plans de trame s'en déduisant par décalages successifs dans le sens trame. Les fils T'1 et T'10 réalisent un liage des fils des couches de chaîne de surface C'1 et C'10 selon une armure toile classique. Les autres fils T'2 à T'9 réalisent un liage entre fils de chaîne de 3 couches voisines, par exemple le fil T'2 réalise un liage entre fils de chaîne des couches C'1, C'2 et C'3.

On a ainsi obtenu un tissu multi-couches d'épaisseur égale à environ 1,6 mm sous une charge de 5 kPa.

Un étalement des fils du tissu a été réalisé en soumettant le tissu à une vibration jusqu'à réduire l'épaisseur à une valeur égale à environ 1,37 mm sous charge de 5 kPa. Le taux volumique de fibres était d'environ 31%.

Des armures autres que multi-sergé ou multi-toile pourront être utilisées pour la mise en oeuvre de l'invention, par exemples des armures multi-satin ou interlock.

## Revendications

1. Pièce en matériau composite thermostructural comprenant un renfort fibreux en fibres de carbone ou de céramique densifié par une matrice,
la pièce ayant au moins une partie dont l'épaisseur est inférieure à 2 mm et dont le renfort fibreux est formé par une seule épaisseur de tissu multi-couches, **caractérisée en ce que**, dans ladite partie de la pièce,
- le tissu multi-couches formant le renfort fibreux est formé de fils étalés ayant un titre au moins égal à 200 tex,
- le taux volumique de fibres est compris entre 25% et 45%, et
- le rapport entre le nombre de couches du tissu multi-couches et l'épaisseur en mm de la pièce est au moins égal à 4.

2. Pièce selon la revendication 1, **caractérisée en ce que**, dans au moins ladite partie de pièce, l'épaisseur est inférieure à 1 mm.

3. Pièce selon l'une quelconque des revendications 1 et 2, **caractérisée en ce que** le nombre de couches du tissu multi-couches est au moins égal à 3.

4. Pièce selon l'une quelconque des revendications 1 à 3, **caractérisée en ce que** le tissu multi-couches est à armure de type multi-toile, multi-sergé ou multi-satin.

5. Pièce selon l'une quelconque des revendications 1 à 4, **caractérisée en ce que** la matrice est au moins partiellement en céramique.

6. Pièce selon la revendication 5 constituant une pièce d'arrière-corps de moteur aéronautique à turbine à gaz.

7. Pièce selon l'une quelconque des revendications 1 à 5 constituant au moins une partie d'un divergent de tuyère de moteur-fusée.

8. Procédé de fabrication d'une pièce en matériau composite thermostructural comprenant la réalisation d'une préforme fibreuse en fibres de carbone ou de céramique et la densification de la préforme par une matrice, procédé selon lequel on utilise une seule épaisseur de tissu multi-couches pour la réalisation d'au moins une partie de la préforme ayant une épaisseur inférieure à 2 mm,
**caractérisé en ce que**, pour la réalisation de ladite partie de préforme:
- on utilise un tissu multi-couches avec des fils ayant un titre au moins égal à 200 tex,
- on soumet le tissu à une opération d'étalement des fils de manière à réduire l'épaisseur du tissu multi-couches, et
- on réalise la partie de préforme avec le tissu multi-couches étalé, le rapport entre le nombre de couches du tissu et l'épaisseur en mm de la partie de préforme étant au moins égal à 4,
- la contexture du tissu multi-couches lors du tissage étant choisie pour avoir, dans la préforme fibreuse, un taux volumique de fibres compris entre 25% et 45%.

9. Procédé selon la revendication 8, **caractérisé en ce qu'**on utilise un tissu multi-couches ayant un nombre de couches au moins égal à 3.

10. Procédé selon la revendication 8 ou la revendication 9, **caractérisé en ce que** le tissage multi-couches est réalisé avec une armure de type multi-toile, multi-sergé ou multi-satin.

## Patentansprüche

1. Teil aus hochtemperaturbeständigem Verbundwerkstoff, umfassend eine Faserverstärkung aus Kohlenstoff- oder Keramikfasern, die durch eine Matrix verdichtet ist, wobei das Teil wenigstens ein Teilstück hat, dessen Dicke weniger als 2 mm beträgt und dessen Faserverstärkung durch eine einzige Mehrlagengewebedicke gebildet ist, **dadurch gekennzeichnet, dass** in dem Teilstück des Teils
- das die Faserverstärkung bildende Mehrlagengewebe von ausgebreiteten Fäden mit einer Feinheitsnummer wenigstens gleich 200 tex gebildet ist,
- der Faservolumenanteil zwischen 25 % und 45 % liegt und
- das Verhältnis zwischen der Anzahl von Lagen des Mehrlagengewebes und der Dicke in mm des Teils wenigstens gleich 4 beträgt.

2. Teil nach Anspruch 1, **dadurch gekennzeichnet, dass** wenigstens in dem Teilstück des Teils die Dicke weniger als 1 mm beträgt.

3. Teil nach einem der Ansprüche 1 und 2, **dadurch gekennzeichnet, dass** die Anzahl der Lagen des Mehrlagengewebes wenigstens gleich 3 ist.

4. Teil nach einem der Ansprüche 1 bis 3, **dadurch gekennzeichnet, dass** das Mehrlagengewebe eine Bindung vom Typ Mehrfachleinwand, Mehrfachköper oder Mehrfachsatin aufweist.

5. Teil nach einem der Ansprüche 1 bis 4, **dadurch gekennzeichnet, dass** die Matrix wenigstens teilweise aus Keramik besteht.

6. Teil nach Anspruch 5, das ein Heckteilstück eines Gasturbinenflugtriebwerks bildet.

7. Teil nach einem der Ansprüche 1 bis 5, das wenigstens ein Teilstück eines divergenten Düsenteils eines Raketentriebwerks bildet.

8. Verfahren zur Herstellung eines Teils aus hochtemperaturbeständigem Verbundwerkstoff, umfassend die Ausbildung eines Faservorformlings aus Kohlenstoff- oder Keramikfasern und die Verdichtung des Vorformlings durch eine Matrix, Verfahren, wonach eine einzige Mehrlagengewebedicke für die Herstellung wenigstens eines Teilstücks des Vorformlings mit einer Dicke von weniger als 2 mm verwendet wird,
**dadurch gekennzeichnet, dass** für die Herstellung des Vorformlingteilstücks
- ein Mehrlagengewebe mit Fäden, die eine Feinheitsnummer wenigstens gleich 200 tex haben, verwendet wird,
- das Gewebe einem Vorgang zum Ausbreiten der Fäden unterzogen wird, um die Dicke des Mehrlagengewebes zu verringern, und
- das Vorformlingteilstück mit dem ausgebreiteten Mehrlagengewebe hergestellt wird, wobei das Verhältnis zwischen der Anzahl von Lagen des Gewebes und der Dicke in mm des Vorformlingteilstücks wenigstens gleich 4 beträgt,
- wobei die Fadendichte des Mehrlagengewebes beim Weben gewählt wird, um in dem Faservorformling einen Faservolumenanteil zwischen 25 % und 45 % zu haben.

9. Verfahren nach Anspruch 8, **dadurch gekennzeichnet, dass** ein Mehrlagengewebe mit einer Anzahl von Lagen wenigstens gleich 3 verwendet wird.

10. Verfahren nach Anspruch 8 oder Anspruch 9, **dadurch gekennzeichnet, dass** das Mehrlagenweben mit einer Bindung vom Typ Mehrfachleinwand, Mehrfachköper oder Mehrfachsatin vollzogen wird.

## Claims

1. A part made of thermostructural composite material comprising carbon or ceramic fiber reinforcement densified by a matrix, the part having at least a portion whose thickness is less than 2 mm, and whose fiber reinforcement is constituted by a single thickness of multilayer fabric, **characterized in that** in said portion of the part:
· the multilayer fabric forming the fiber reinforcement is made up of spread yarns weighing at least 200 tex;
· the fiber volume ratio lies in the range 25% to 45%; and
· the ratio between the number of layers of the multilayer fabric and the thickness in millimeters of the part is not less than four.

2. A part according to claim 1, **characterized in that**, at least in said portion of the part, its thickness is less than 1 mm.

3. A part according to claim 1 or claim 2, **characterized in that** the number of layers of the multilayer fabric is not less than three.

4. A part according to any one of claims 1 to 3, **characterized in that** the multilayer fabric has a multi-plain, multi-serge, or multi-satin type weave.

5. A part according to any one of claims 1 to 4, **characterized in that** the matrix is made at least partially of ceramic.

6. A part according to claim 5, constituting an afterbody part of a gas turbine aeroengine.

7. A part according to any one of claims 1 to 5, constituting at least a portion of a rocket engine nozzle exhaust cone.

8. A method of fabricating a thermostructural composite material part comprising making a carbon or ceramic fiber preform and densifying the preform with a matrix, wherein a single thickness of multilayer fabric is used for making at least a portion of the preform having a thickness of less than 2 mm, the method being **characterized in that** in order to make said portion of the preform, the following steps are performed:
· making a multilayer fabric having yarns weighing not less than 200 tex;
· subjecting the fabric to an operation of spreading the yarns so as to reduce the thickness of the multilayer fabric; and
· making said preform portion from the spread multilayer fabric, the ratio between the number of layers of the fabric and the thickness in millimeters of said preform portion being not less than four;
the thread count of the multilayer fabric during weaving being selected so as to obtain a volume fiber ratio lying in the range 25% to 45% in the fiber preform.

9. A method according to claim 8, **characterized in that** a multilayer fabric is used in which the number of layers is not less than three.

10. A method according to claim 8 or claim 9, **characterized in that** the multilayer weaving is performed with a multi-plain, multi-serge, or multi-satin type weave.
